# FASCICULE DE BREVET EUROPEEN

(11) **EP 4 179 171 B1**
(45) Date de publication et mention de la délivrance du brevet: **11.09.2024**
(21) Numéro de dépôt: 21742462.1
(22) Date de dépôt: 07.07.2021
(51) Int. Cl.: B28B 3/20, B28C 5/12, B33Y 40/10, C04B 28/00, C04B 28/04, C04B 111/00, C04B 111/28, B28B 1/00, B28C 7/04, B33Y 10/00, B33Y 30/00, B33Y 80/00, C04B 28/02, C04B 38/10, E04C 1/41, E04G 21/04

(54) **FABRICATION ADDITIVE D'ÉLÉMENT DE CONSTRUCTION ISOLANTS**
ADDITIVE FERTIGUNG VON DÄMMSTOFFBAUELEMENTEN
ADDITIVE MANUFACTURING OF INSULATING CONSTRUCTION ELEMENTS

(30) Priorité: 08.07.2020 FR 2007211
(43) Date de publication de la demande: 17.05.2023
(73) Titulaire: Saint-Gobain Weber France, 94370 Sucy en Brie (FR)
(72) Inventeur: DUNAEVA, Elena, 75015 Paris (FR); BEAUMONT, Julien, 75017 Paris (FR); NUNES LOBO, Bruno Miguel, 5654 CS Eindhoven (NL); DUDDA, Udo, 44869 Bochum (DE)
(74) Mandataire: Saint-Gobain Recherche
(86) Numéro de dépôt international: PCT/FR2021/051254
(87) Numéro de publication internationale: WO 2022/008843

(56) Documents cités:
- EP-A1- 3 613 715
- FR-A1- 3 050 744
- FR-A1- 3 088 569
- US-A- 4 057 608
- US-A1- 2018 354 854
- NATIONAL RESEARCH COUNCIL: "Review of Doe's Vision 21 Research and Development Program: Phase 1", 15 May 2005 (2005-05-15), pages 1 - 7, XP055842176, ISBN: 978-0-309-08717-9, Retrieved from the Internet <URL:https://www.kniele.de/images/pdf-en/cpt-2021_01-3d-print-foam-concrete-kniele-kkm-tu-dresden.pdf> [retrieved on 20210917]

## Description

L'invention se rapporte au domaine de la construction. Elle concerne plus particulièrement la fabrication d'éléments de construction isolants par une technique de fabrication additive.

En plus de ses avantages en termes de confort et d'économie, l'isolation thermique des bâtiments, aussi bien en construction qu'en rénovation, constitue un enjeu primordial dans la lutte contre le réchauffement climatique. Il est donc essentiel que les éléments de construction possèdent la plus faible conductivité thermique possible. Pour répondre à cette problématique, un grand nombre de solutions techniques ont été proposées, qui mettent en oeuvre des éléments isolants divers (laines minérales, mousses organiques etc...) associés à des éléments structurels (murs, toitures etc...) .

L'invention vise à proposer de nouvelles techniques de fabrication d'éléments de construction présentant une isolation thermique améliorée.

Les techniques de fabrication additive connaissent aujourd'hui des développements prometteurs dans un grand nombre de domaines techniques. Egalement appelée « impression 3D », la fabrication additive est une méthode dans laquelle un robot contrôlé par ordinateur fabrique des objets tridimensionnels en déposant de manière continue un matériau couche après couche. Ces techniques permettent en particulier de fabriquer des objets présentant des formes complexes.

La fabrication additive a par exemple été employée pour fabriquer des éléments structurels tels que des murs en béton.

La fabrication additive d'éléments de construction, par exemple en béton ou mortier, permet d'intégrer les processus de conception, de planification et de construction et d'automatiser et rationaliser ce dernier. D'autres avantages de cette technologie sont notamment une réduction du coût de main d'oeuvre, une réduction des pertes et de la consommation en matériau, la suppression des coffrages et la réduction de la durée des projets et des investissements.

Dans les technologies connues, un mortier humide, obtenu en mélangeant un mortier sec et de l'eau de gâchage, est pompé et convoyé vers une tête d'impression solidaire d'un robot ou d'un portique dont le mouvement est contrôlé par ordinateur. Une couche de mortier humide est déposée sur une couche de mortier précédemment déposée, généralement en étant extrudée au travers d'une buse. La tête d'impression est continûment déplacée selon un schéma prédéterminé afin de fabriquer l'objet final. FR 3 050 744 A1 divulgue un procédé d'obtention par fabrication additive d'un élément de construction comprenant au moins un élément structurel et au moins un élément isolant.

L'invention se propose d'obtenir par ce type de techniques des éléments de construction ayant une fonction d'isolation thermique.

A cet effet l'invention a pour objet un procédé d'obtention par fabrication additive d'un élément de construction comprenant au moins un élément structurel et au moins un élément isolant, selon la revendication 1, dans lequel on mélange un mortier sec avec de l'eau de gâchage de manière à former un mortier humide de base, on transporte ledit mortier humide de base vers une tête d'impression, et l'on dépose successivement, par déplacement de ladite tête d'impression, des couches de mortier superposées de manière à former ledit au moins un élément structurel et ledit au moins un élément isolant, ledit procédé étant tel qu'avant le dépôt des couches de mortier appartenant à un élément isolant, on ajoute en outre une mousse aqueuse audit mortier humide de base lors du transport dudit mortier humide de base vers la tête d'impression.

La présente description concerne également un élément de construction comprenant au moins un élément structurel et au moins un élément isolant, obtenu, ou simplement susceptible d'être obtenu, par le procédé selon l'invention.

La présente description concerne aussi un système pour la mise en oeuvre du procédé selon l'invention. Un tel système comprend un dispositif de gâchage apte à mélanger un mortier sec avec de l'eau de gâchage de manière à former un mortier humide de base, un dispositif de transport apte à transporter ledit mortier humide de base vers une imprimante comprenant une tête d'impression pouvant être déplacée de manière à déposer des couches de mortiers superposées, un dispositif générateur de mousse apte à générer une mousse aqueuse, et un dispositif de mélange apte à mélanger ledit mortier humide de base et ladite mousse aqueuse.

On entend par « élément structurel » un élément du bâtiment qui satisfait à un rôle de structure ou qui participe à son confortement. L'élément isolant ajoute quant à lui une isolation thermique voire également phonique.

L'élément de construction sera le plus souvent un mur ou un élément de mur, en particulier pour un mur de façade ou de refend. Il peut aussi être un élément de plancher. L'élément sera généralement destiné à être intégré à la structure d'un bâtiment. La présence de l'élément structurel permet en effet à l'élément de construction de jouer ce rôle structurel.

Dans le cas d'un mur, l'élément de construction possède de préférence, dans un plan vertical en situation d'utilisation (c'est-à-dire une fois l'élément intégré au bâtiment), une hauteur et une largeur et, selon une normale à ce plan vertical, une épaisseur. Typiquement, chaque élément structurel et chaque élément isolant s'étend dans le plan vertical, sur toute la hauteur et la largeur de l'élément de construction. Ces éléments se succèdent alors dans l'épaisseur de l'élément de construction. Les éléments structurel et isolant sont de préférence en contact l'un avec l'autre, de sorte que l'épaisseur du mur est égale à la somme des épaisseurs de chacun de ces éléments. L'élément de construction peut présenter une forme de parallélépipède rectangle. D'autres formes sont toutefois possibles, la technique de fabrication additive permettant d'obtenir des formes très variées.

L'invention applique donc les techniques de fabrication additive pour construire à la fois le ou les élément(s) structurel(s) ou porteur(s) de l'élément de construction et au moins un élément isolant.

L'invention permet, à partir d'un même mortier sec, d'ajuster la densité du mortier final afin de construire avec le même système d'impression, et notamment avec la même tête d'impression le ou les éléments structurels et le ou les éléments isolants.

Ainsi, lorsque la tête d'impression dépose des couches de mortier appartenant à un élément structurel, aucun ajout de mousse aqueuse n'est normalement réalisé. Le mortier humide arrivant à la tête d'impression est alors le mortier humide de base. En revanche, lorsque la tête d'impression dépose des couches de mortier appartenant à un élément isolant, une certaine quantité de mousse aqueuse est préalablement ajoutée au mortier humide de base, ce qui permet d'ajuster la densité du mortier final et par conséquent de conférer des propriétés d'isolation thermique à l'élément. Le mortier humide arrivant à la tête d'impression est alors un mélange du mortier humide de base et de la mousse aqueuse.

Le ou chaque élément structurel est normalement obtenu sans ajout de mousse aqueuse. On obtient ainsi des couches de mortier particulièrement denses, aptes à jouer leur rôle structurel. De préférence, la masse volumique après durcissement (notamment après 28 jours) des couches de mortier appartenant à l'élément structurel est d'au moins 2000 kg/m³, notamment d'au moins 2100 kg/m³. Cette masse volumique est de préférence inférieure ou égale à 2500 kg/m³.

Au moins un, voire chaque, élément isolant est obtenu avec ajout de mousse aqueuse. On obtient ainsi des couches de mortier moins denses que les couches de mortier appartenant à l'élément structurel. La masse volumique après durcissement (notamment après 28 jours) des couches de mortier appartenant à au moins un élément isolant est de préférence d'au plus 1500 kg/m³, notamment d'au plus 1200 kg/m³.

Selon un mode de réalisation, l'élément de construction comprend un élément isolant dont la masse volumique après durcissement (notamment après 28 jours) est d'au plus 100 kg/m³. Un tel élément présentera d'excellentes propriétés d'isolation thermique.

Selon un autre mode de réalisation, l'élément de construction comprend un élément isolant dont la masse volumique après durcissement (notamment après 28 jours) est comprise entre 700 et 1500 kg/m³, notamment entre 800 et 1200 kg/m³. Un tel élément présentera des propriétés d'isolation thermique modérée.

Un mode de réalisation préféré combine les deux modes de réalisation précédents. Dans ce cas, l'élément de construction comprend un élément structurel, un premier élément isolant et un deuxième élément isolant, le deuxième élément isolant ayant une masse volumique supérieure à celle du premier élément isolant. Dans le procédé, la quantité de mousse aqueuse ajoutée au mortier humide de base lors de l'obtention du premier élément isolant est alors supérieure à la quantité de mousse aqueuse ajoutée au mortier humide de base lors de l'obtention du deuxième élément isolant. De préférence, la masse volumique après durcissement des couches de mortier appartenant au premier élément isolant est d'au plus 100 kg/m³ et la masse volumique après durcissement des couches de mortier appartenant au deuxième élément isolant est comprise entre 700 et 1500 kg/m³. Dans le cas d'un mur, l'élément de construction comprend de préférence, depuis l'extérieur du mur, l'élément porteur, puis le premier élément isolant, puis le deuxième élément isolant.

Dans une variante de ce mode de réalisation préféré, seul le deuxième élément isolant est obtenu par fabrication additive. Le premier élément isolant est quant à lui obtenu par coulage du matériau qui le constitue dans la cavité formée par l'élément structurel et le deuxième élément isolant. L'étape de coulage peut être réalisée à l'aide d'un robot.

Selon un mode de réalisation de l'invention, les éléments structurels et isolants sont formés de manière séquentielle. Le dispositif de transport de mortier comprend alors avantageusement un seul tuyau transportant le mortier humide vers une seule tête d'impression, qui va imprimer chaque élément (structurel ou isolant) l'un après l'autre. Ainsi, le système comprend de préférence une seule pompe et un seul tuyau, l'ajout de mousse aqueuse étant effectué lors de la formation des éléments isolants et arrêté lors de la formation des éléments structurels.

Selon un autre mode de réalisation de l'invention, les éléments structurels et isolants sont formés de manière simultanée. Le dispositif de transport de mortier comprend alors avantageusement une pluralité de tuyaux transportant chacun du mortier humide vers une tête d'impression différente, ou vers une chambre différente de la même tête d'impression, l'ajout de mousse aqueuse n'étant effectué que dans le ou les tuyau(x) transportant le mortier humide de base destiné à former un élément isolant. Chaque tuyau peut être relié à la même pompe ou à une pompe différente.

Par mortier sec on entend un mélange pulvérulent. Le mortier sec comprend de préférence au moins un liant minéral, notamment hydraulique, par exemple choisi parmi les ciments Portland, les ciments alumineux, les ciments sulfoalumineux, la chaux hydratée, les laitiers de haut fourneau granulés broyés, les cendres volantes et leurs mélanges. Le liant hydraulique est avantageusement du ciment Portland, voire est constitué d'un tel ciment. Le liant minéral peut aussi être à base de gypse ou être un liant géopolymère.

Le mortier sec comprend de préférence des granulats. Ces granulats sont notamment des granulats de type siliceux, calcaire et/ou dolomitique. Il peut également s'agir de granulats légers, c'est-à-dire ayant une masse volumique apparente inférieure à 200 kg/m³. Les granulats légers sont notamment choisis parmi la perlite, la vermiculite, les billes de verre expansé, les billes de polystyrène expansé, les cénosphères, les silicates expansés, les aérogels et leurs mélanges. La taille maximale des granulats est de préférence d'au plus 3 mm, notamment d'au plus 2 mm et même d'au plus 1 mm, compte tenu de la section réduite du dispositif de pompage et de la buse de la tête d'impression. La taille maximale peut être vérifiée par exemple par tamisage.

Le mortier sec comprend de préférence au moins un additif, notamment choisi parmi les superplastifiants, les épaississants, les accélérateurs et les retardateurs. Le mortier sec comprend avantageusement des épaississants inorganiques, par exemple des argiles gonflantes, capables d'augmenter la limite d'élasticité au repos du mortier humide. Les accélérateurs et retardateurs permettent d'ajuster le temps nécessaire à la prise et au durcissement du liant hydraulique.

La composition du mortier sec est de préférence ajustée de sorte que le mortier humide de base présente un comportement thixotrope. De préférence, la viscosité du mortier humide de base augmente d'un facteur d'au moins 50 seulement une seconde après que le mortier humide a quitté la buse d'impression. Le mortier humide de base présente alors une faible viscosité pour de forts taux de cisaillement de sorte qu'il peut être facilement pompé et convoyé, mais présente une augmentation immédiate de sa stabilité structurelle dès qu'il quitte la buse de la tête d'impression, permettant ainsi de supporter les couches sus-jacentes avant prise et durcissement. Ce dépôt sur couche de mortier encore humide permet d'améliorer l'adhésion entre les couches successives, et donc la résistance mécanique finale de l'élément de construction.

Le mortier sec est mélangé avec de l'eau de gâchage afin de former le mortier humide de base. L'eau de gâchage peut être simplement de l'eau, ou encore de l'eau comprenant en solution, en dispersion ou en suspension, un ou plusieurs additifs, notamment organiques, par exemple des tensioactifs.

Le taux de gâchage, c'est-à-dire le rapport entre la quantité d'eau de gâchage et la quantité de mortier sec (en poids) peut le cas échéant être ajusté selon la nature de l'élément. Alternativement, le taux de gâchage peut être le même pour tous les éléments. Le taux de gâchage est de préférence d'au plus 0,5, notamment compris entre 0,05 et 0,20.

Le mortier humide est de consistance pâteuse et peut être pompé et transporté vers la tête d'impression. Le pompage est par exemple réalisé au moyen d'une pompe à vis. Le transport se fait typiquement dans un tuyau. Le dispositif de transport comprend donc de préférence une pompe, notamment une pompe à vis, ainsi qu'au moins un tuyau.

Au moins pour la réalisation des éléments isolants, une mousse aqueuse est ajoutée au mortier humide de base lors du transport du mortier humide de base vers la tête d'impression.

Le mélange de la mousse aqueuse et du mortier humide de base est de préférence réalisé au moyen d'un mélangeur statique. Le dispositif de mélange est donc de préférence un mélangeur statique.

L'ajout de la mousse aqueuse est de préférence réalisé entre la pompe et la tête d'impression, idéalement le plus près possible de la tête d'impression afin de conserver la structure de la mousse. Un ajout trop près de la tête d'impression peut toutefois être préjudiciable à un mélange homogène de la mousse aqueuse avec le mortier de base.

La quantité de mousse aqueuse par rapport à la quantité de mortier humide de base est de préférence ajustée automatiquement. Elle est notamment ajustée en fonction de la densité recherchée dans la zone considérée. Le rapport entre le volume de mousse aqueuse ajoutée et le volume de mortier humide de base est de préférence compris entre 0,5 et 15, notamment entre 1 et 12.

Par exemple, pour une masse volumique après durcissement de 100 kg/m³, le rapport entre le volume de mousse aqueuse ajoutée et le volume de mortier humide de base est typiquement de l'ordre de 10. Pour une masse volumique après durcissement de 800 kg/m³, le rapport entre le volume de mousse aqueuse ajoutée et le volume de mortier humide de base est typiquement de l'ordre de 1,3.

La mousse aqueuse est par exemple obtenue en mélangeant de l'eau et un agent moussant (ou un agent stabilisateur de mousse) puis en introduisant un gaz, notamment de l'air, par agitation, bullage ou encore injection sous pression. Le diamètre médian des bulles de la mousse aqueuse est de préférence d'au plus 400 µm, notamment d'au plus 200 µm.

L'agent moussant est par exemple un tensioactif. Selon un exemple préféré, il s'agit d'un tensioactif issu de protéines ou d'aides aminés.

Selon un autre exemple, la mousse aqueuse comprend le mélange d'un tensioactif cationique qui est un sel (notamment un halogénure) d'ammonium quaternaire et d'un tensioactif anionique qui est un sel (notamment un sel alcalin) d'acide carboxylique en C10-C24, par exemple du stéarate de potassium.

Selon encore un autre exemple, la mousse aqueuse comprend des nanoparticules, notamment de silice, qui ont la propriété de stabiliser les mousses. De telles mousses sont appelées « mousses de Pickering ». Les nanoparticules de silice peuvent être elles-mêmes stabilisées par des tensioactifs.

Grâce à l'ajout de mousse aqueuse, le mortier comprend une importante quantité de gaz, en particulier d'air, emprisonnée dans une matrice minérale, et présente en conséquence une faible conductivité thermique, notamment en réduisant les transferts thermiques par convection et par conduction. La conductivité thermique des éléments isolants après durcissement (en particulier après 28 jours) est de préférence d'au plus 60 mW.m⁻¹.K⁻¹. Elle est idéalement autour de 40 mW.m⁻¹.K⁻¹.

La tête d'impression comprend notamment une buse à travers laquelle le mortier humide (mortier humide de base, éventuellement additionné de mousse aqueuse) est extrudé. La buse d'extrusion est de préférence située à moins de 100 mm de la couche sous-jacente. L'imprimante est par exemple un robot industriel ou un portique, portant la tête d'impression, et dont le mouvement est piloté par un ordinateur. L'ordinateur comprend notamment un support d'enregistrement dans lequel est stocké un ensemble de données ou modèle 3D ainsi que des instructions, qui lorsqu'elles sont exécutées par l'ordinateur conduisent ce dernier à contrôler le déplacement (trajectoire, vitesse...) de la tête d'impression ainsi que d'autres paramètres du procédé, par exemple le rapport entre la quantité de mousse aqueuse et la quantité de mortier humide de base, ou encore le taux de gâchage (c'est-à-dire le rapport entre la quantité d'eau de gâchage et la quantité de mortier sec).

La vitesse d'impression est typiquement de 30 à 1000 mm/s, notamment de 50 à 300 mm/s. L'épaisseur (ou hauteur, puisqu'il s'agit ici de la dimension dans la direction verticale) des couches de mortier est de préférence comprise entre 5 et 40 mm, notamment entre 10 et 20 mm. La largeur des couches de mortier est de préférence comprise entre 10 et 300 mm, notamment entre 20 et 100 mm.

Le procédé peut aussi comprendre l'ajout au mortier humide, avant le dépôt, d'un accélérateur de prise et/ou de durcissement ou d'un agent modificateur de rhéologie. L'ajout peut notamment se faire au niveau de la buse ou à proximité de la buse, donc juste avant extrusion. Alternativement, l'accélérateur ou l'agent modificateur de rhéologie peut être ajouté immédiatement après le dépôt, en surface des couches. L'accélérateur de prise est par exemple un sulfate d'aluminium ou un sel de lithium, selon le type de liant hydraulique employé. L'agent modificateur de rhéologie permet par exemple de conférer un caractère thixotropique au mortier. L'ajout d'un accélérateur de prise ou d'un agent modificateur de rhéologie permet de consolider rapidement les couches de mortier, de façon à ce qu'elles puissent supporter le poids des couches sus-jacentes sans déformation.

L'élément de construction peut également comprendre des pièces de renfort. Ces pièces, destinées à renforcer mécaniquement les éléments, sont de préférence déposées pendant l'impression des couches de mortier. Elles peuvent être déposées horizontalement dans l'épaisseur d'une couche de mortier, ou au contraire verticalement, et s'étendent alors dans plusieurs couches de mortier. Les pièces de renfort sont par exemple en acier.

Les éléments de construction peuvent être des éléments préfabriqués, destinés à être assemblés sur le chantier de construction, par exemple au moyen d'un mortier, afin de former les murs extérieurs ou intérieurs (par exemple les murs de refend) d'un bâtiment. Les éléments peuvent aussi être fabriqués directement sur le chantier de construction et former le mur complet du bâtiment.

Les dimensions latérales de l'élément de construction sont de préférence comprises entre 1 et 4 m, notamment entre 1 et 3 m. L'épaisseur est de préférence d'au plus 70 cm, notamment comprise entre 20 et 50 cm.

La résistance thermique de l'élément de construction est de préférence comprise entre 3,0 et 5,0 m².K/W.
[Fig. 1] illustre un mode de réalisation particulier et non-limitatif de l'invention.
[Fig. 2] illustre de manière schématique un exemple de système selon l'invention.

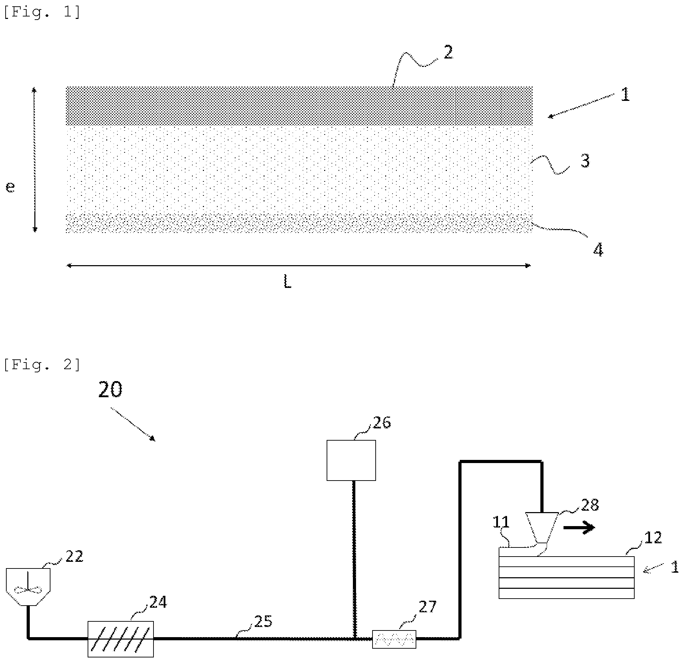

La figure 1 représente schématiquement une vue de dessus d'un élément de construction 1, ici un mur, obtenu par le procédé de l'invention.

Le mur 1 présente ici la forme d'un parallélépipède rectangle, ayant une épaisseur e une largeur L. Ce n'est ici qu'un exemple et il va de soi que la technique de fabrication additive autorise des formes bien plus variées.

Le mur 1 comprend, depuis l'extérieur du bâtiment en situation d'utilisation, un élément structurel 2 en contact avec un premier élément isolant 3, lui-même en contact avec un deuxième isolant 4. Chacun de ces éléments s'étendent sur tout la hauteur et la largeur du mur.

Les masses volumiques après 28 jours de durcissement sont supérieures à 2000 kg/m³ pour l'élément structurel 2, inférieures à 100 kg/m³ pour le premier élément isolant 3 et entre 700 et 1200 kg/m³ pour le deuxième élément isolant 4. Le deuxième élément isolant 4 est donc plus sous la forme d'une paroi allégée, le premier élément isolant 3 étant plus sous la forme d'une mousse minérale.

Un tel mur 1 a été obtenu grâce à un système d'impression 20, représenté schématiquement en figure 2, comprenant :
- un dispositif de gâchage 22 pour mélanger le mortier sec avec l'eau de gâchage,
- un dispositif de transport comprenant une pompe à vis 24 permettant de pomper et transporter le mortier humide de base ainsi obtenu dans un tuyau 25,
- un dispositif générateur de mousse 26 permettant de générer une mousse aqueuse, la mousse étant introduite dans le tuyau 25 après la pompe 24
   un dispositif de mélange 27, plus particulièrement un mélangeur statique branché sur le tuyau 25 afin de mélanger le mortier de base avec la mousse aqueuse,
- une tête d'impression 28 comprenant une buse à travers laquelle le mortier humide peut être extrudé afin de déposer une couche de mortier humide 11 sur des couches de mortiers 12 préalablement déposées. Le déplacement de la tête d'impression 28 était portée par un robot piloté par ordinateur.

Le mortier sec comprenait du ciment Portland et des granulats fins de type siliceux. Le taux de gâchage était de 0,12 pour obtenir le mortier humide de base.

Les éléments structurels et isolants ont été formés de manière séquentielle. L'élément structurel 2 a d'abord été formé en superposant des couches de mortier 12 dont la largeur était égale à l'épaisseur de la couche. Durant cette fabrication, aucune mousse aqueuse n'a été ajoutée au mortier humide de base. Dans une deuxième étape, le deuxième élément isolant a été formé à distance de l'élément structurel, de manière à créer une cavité. Durant cette fabrication, de la mousse aqueuse a été ajoutée au mortier humide de base, le rapport entre le volume de mousse aqueuse et le volume de mortier humide de base étant d'environ 1,3. Dans une troisième étape, le premier élément isolant a été coulé dans la cavité.

Dans une variante, le premier élément isolant a été réalisé par fabrication additive, comme l'élément structurel et le deuxième élément isolant.

## Revendications

1. Procédé d'obtention par fabrication additive d'un élément de construction (1) comprenant au moins un élément structurel (2) et au moins un élément isolant (3, 4), dans lequel on mélange un mortier sec avec de l'eau de gâchage de manière à former un mortier humide de base, on transporte ledit mortier humide de base vers une tête d'impression (28), et l'on dépose successivement, par déplacement de ladite tête d'impression (28), des couches de mortier (11, 12) superposées de manière à former ledit au moins un élément structurel (2) et ledit au moins un élément isolant (3, 4), ledit procédé étant tel qu'avant le dépôt des couches de mortier appartenant à un élément isolant (3, 4), on ajoute en outre une mousse aqueuse audit mortier humide de base lors du transport dudit mortier humide de base vers la tête d'impression (28).

2. Procédé selon la revendication 1, dans lequel l'élément de construction (1) est un mur ou un élément de mur.

3. Procédé selon l'une des revendications précédentes, dans lequel la masse volumique après durcissement des couches de mortier appartenant à l'élément structurel (2) est d'au moins 2000 kg/m³, notamment d'au moins 2100 kg/m³.

4. Procédé selon l'une des revendications précédentes, dans lequel la masse volumique après durcissement des couches de mortier appartenant à au moins un élément isolant (3, 4) est d'au plus 1500 kg/m³.

5. Procédé selon la revendication 4, tel que l'élément de construction (1) comprend un élément isolant (3) dont la masse volumique après durcissement est d'au plus 100 kg/m³.

6. Procédé selon la revendication 4, tel que l'élément de construction (1) comprend un élément isolant (4) dont la masse volumique après durcissement est comprise entre 700 et 1500 kg/m³, notamment entre 800 et 1200 kg/m³.

7. Procédé selon l'une des revendications précédentes, dans lequel l'élément de construction (1) comprend un élément structurel (2), un premier élément isolant (3) et un deuxième élément isolant (4), le deuxième élément isolant (4) ayant une masse volumique supérieure à celle du premier élément isolant (3), la quantité de mousse aqueuse ajoutée au mortier humide de base lors de l'obtention du premier élément isolant (3) étant supérieure à la quantité de mousse aqueuse ajoutée au mortier humide de base lors de l'obtention du deuxième élément isolant (4).

8. Procédé selon la revendication précédente, dans lequel la masse volumique après durcissement des couches de mortier appartenant au premier élément isolant (3) est d'au plus 100 kg/m³ et la masse volumique après durcissement des couches de mortier appartenant au deuxième élément isolant (4) est comprise entre 700 et 1500 kg/m³.

9. Procédé selon l'une des revendications précédentes, dans lequel les éléments structurels (2) et les éléments isolants (3, 4) sont formés de manière séquentielle.

10. Procédé selon l'une des revendications 1 à 8, dans lequel les éléments structurels (2) et les éléments isolants (3, 4) sont formés de manière simultanée.

11. Procédé selon l'une des revendications précédentes, dans lequel la quantité de mousse aqueuse par rapport à la quantité de mortier humide de base est ajustée automatiquement.

12. Procédé selon l'une des revendications précédentes, dans lequel le mortier sec comprend au moins un liant hydraulique, notamment choisi parmi les ciments Portland, les ciments alumineux, les ciments sulfoalumineux, la chaux hydratée, les laitiers de haut fourneau granulés broyés, les cendres volantes et leurs mélanges.

13. Procédé selon l'une des revendications précédentes, dans lequel le mélange de la mousse aqueuse et du mortier humide de base est réalisé au moyen d'un mélangeur statique (27).

## Patentansprüche

1. Verfahren zum Gewinnen durch Additivfertigung eines Bauelements (1), umfassend mindestens ein Strukturelement (2) und mindestens ein Dämmelement (3, 4), wobei ein Trockenmörtel mit Anmachwasser gemischt wird, um einen Grundnassmörtel auszubilden, der Grundnassmörtel zu einem Druckkopf (28) transportiert wird und durch Bewegen des Druckkopfs (28), überlagerte Mörtelschichten (11, 12) nacheinander abgeschieden werden, um das mindestens eine Strukturelement (2) und das mindestens eine Dämmelement (3, 4) auszubilden, wobei das Verfahren so gestaltet ist, dass vor dem Abscheiden der Mörtelschichten, die zu einem Dämmelement (3, 4) gehören, dem Grundnassmörtel während des Transportierens des Grundnassmörtels zu dem Druckkopf ferner ein wässriger Schaum (28) zugesetzt wird.

2. Verfahren nach Anspruch 1, wobei das Bauelement (1) eine Wand oder ein Wandelement ist.

3. Verfahren nach einem der vorstehenden Ansprüche, wobei die Dichte nach dem Aushärten der Mörtelschichten, die zu dem Bauelement (2) gehören, mindestens 2000 kg/m³, insbesondere mindestens 2100 kg/m³ beträgt.

4. Verfahren nach einem der vorstehenden Ansprüche, wobei die Dichte nach dem Aushärten der Mörtelschichten, die zu mindestens einem Dämmelement (3, 4) gehören, höchstens 1500 kg/m³ beträgt.

5. Verfahren nach Anspruch 4, wobei das Bauelement (1) ein Dämmelement (3) umfasst, dessen Dichte nach dem Aushärten höchstens 100 kg/m³ beträgt.

6. Verfahren nach Anspruch 4, wobei das Bauelement (1) ein Dämmelement (4) umfasst, dessen Dichte nach dem Aushärten zwischen 700 und 1500 kg/m³, insbesondere zwischen 800 und 1200 kg/m³ beträgt.

7. Verfahren nach einem der vorstehenden Ansprüche, wobei das Bauelement (1) ein Strukturelement (2), ein erstes Dämmelement (3) und ein zweites Dämmelement (4) umfasst, wobei das zweite Dämmelement (4) eine Dichte besitzt, die größer als die des ersten Dämmelements (3) ist, wobei die Menge an wässrigem Schaum, die dem Grundnassmörtel bei der Gewinnung des ersten Dämmelements (3) zugesetzt wird, größer als die Menge an wässrigem Schaum ist, die dem Grundnassmörtel bei dem Gewinnen des zweiten Dämmelements (4) zugesetzt wird.

8. Verfahren nach dem vorstehenden Anspruch, wobei die Dichte nach dem Aushärten der Mörtelschichten, die zu dem ersten Dämmelement (3) gehören, höchstens 100 kg/m³ beträgt, und die Dichte nach dem Aushärten der Mörtelschichten, die zu dem zweiten Dämmelement (4) gehören, zwischen 700 und 1500 kg/m³ liegt.

9. Verfahren nach einem der vorstehenden Ansprüche, wobei die Strukturelemente (2) und die Dämmelemente (3, 4) nacheinander ausgebildet werden.

10. Verfahren nach einem der Ansprüche 1 bis 8, wobei die Strukturelemente (2) und die Dämmelemente (3, 4) gleichzeitig ausgebildet werden.

11. Verfahren nach einem der vorstehenden Ansprüche, wobei die Menge an wässrigem Schaum relativ zu der Menge an Grundnassmörtel automatisch angepasst wird.

12. Verfahren nach einem der vorstehenden Ansprüche, wobei der Trockenmörtel mindestens ein hydraulisches Bindemittel umfasst, insbesondere ausgewählt aus Portlandzementen, Tonerdezementen, Sulfoaluminiumzementen, Löschkalk, zerkleinerten granulierten Hochofenschlacken, Flugaschen und deren Mischungen.

13. Verfahren nach einem der vorstehenden Ansprüche, wobei das Mischen des wässrigen Schaums und des Grundnassmörtels mittels eines statischen Mischers (27) erfolgt.

## Claims

1. A method for obtaining, by additive manufacturing, a construction element (1) comprising at least one structural element (2) and at least one insulating element (3, 4), wherein a dry mortar is mixed with mixing water so as to form a basic wet mortar, said basic wet mortar is transported to a printing head (28), and stacked layers of mortar (11, 12) are successively deposited by moving said printing head (28) so as to form said at least one structural element (2) and said at least one insulating element (3, 4), said method being such that, before depositing the layers of mortar belonging to an insulating element (3, 4), an aqueous foam is additionally added to said basic wet mortar during the transport of said basic wet mortar to the printing head (28).

2. The method according to claim 1, wherein the construction element (1) is a wall or a wall element.

3. The method according to one of the preceding claims, wherein the density after hardening of the layers of mortar belonging to the structural element (2) is at least 2000 kg/m³, particularly at least 2100 kg/m³.

4. The method according to one of the preceding claims, wherein the density after hardening of the layers of mortar belonging to the at least one insulating element (3, 4) is at most 1500 kg/m³.

5. The method according to claim 4, such that the construction element (1) comprises an insulating element (3) the density whereof after hardening is at most 100 kg/m³.

6. The method according to claim 4, such that the construction element (1) comprises an insulating element (4) the density whereof after hardening is between 700 and 1500 kg/m³, particularly between 800 and 1200 kg/m³.

7. The method according to one of the preceding claims, wherein the construction element (1) comprises a structural element (2), a first insulating element (3) and a second insulating element (4), the second insulating element (4) having a density greater than that of the first insulating element (3), the quantity of aqueous foam added to the basic wet mortar when the first insulating element (3) is obtained being greater than the quantity of aqueous foam added to the basic wet mortar when the second insulating element (4) is obtained.

8. The method according to the preceding claim, wherein the density after hardening of the mortar layers belonging to the first insulating element (3) is at most 100 kg/m³ and the density after hardening of the mortar layers belonging to the second insulating element (4) is between 700 and 1500 kg/m³.

9. The method according to one of the preceding claims, wherein the structural elements (2) and the insulating elements (3, 4) are formed sequentially.

10. The method according to one of claims 1 to 8, wherein the structural elements (2) and the insulating elements (3, 4) are formed simultaneously.

11. The method according to one of the preceding claims, wherein the quantity of aqueous foam relative to the quantity of basic wet mortar is adjusted automatically.

12. The method according to one of the preceding claims, wherein the dry mortar comprises at least one hydraulic binder, in particular chosen from Portland cements, aluminous cements, sulfoaluminate cements, hydrated lime, ground granulated blast furnace slag, fly ash and mixtures thereof.

13. The method according to one of the preceding claims, wherein the
mixing of the aqueous foam and the basic wet mortar is done using a static mixer (27).
